Europäisches Patentamt

**European Patent Office**

Office européen des brevets

(11) Publication number: **0 242 463**
**A1**

# (12) EUROPEAN PATENT APPLICATION

(21) Application number: 86302998.9

(22) Date of filing: 21.04.86

(51) Int. Cl.4: **A01D 69/00 , A01F 29/14**

(43) Date of publication of application:
28.10.87 Bulletin 87/44

(84) Designated Contracting States:
**DE FR GB**

(71) Applicant: **NEW HOLLAND INC.**
**500, Diller Avenue**
**New Holland Pennsylvania 17557(US)**

(72) Inventor: **McClure, John R.**
**Route 3**
**New Holland Pennsylvania 17557(US)**
Inventor: **Hedstrom, David D.**
**49 Stoney Run Road**
**Stevens Pennsylvania 17578(US)**

(74) Representative: **Singleton, Jeffrey et al**
**ERIC POTTER & CLARKSON 27 South Street**
**Reading Berkshire, RG1 4QU(GB)**

(54) **Forage harvesters.**

(57) A forage harvester comprises cutter means
(6,7,8) operable to chop crop material substantially
into pieces of a preselected length, feeder means
(5) operable to feed crop material to the cutter
means (6,7,8), and chain-and-sprocket drive means
(10;60) including a drive chain (30;65) for driving the
feeder means (5) and of which one sprocket (23) is
replaceable by a differently sized sprocket (23',23")
so as to vary the speed of the drive means (10;60)
and hence the speed of the feeder means (5) which
in turn varies the length of cut of the crop material.
The chain-and-sprocket drive means (10;60) comprises at least one idler sprocket (26) which is movable away from and towards the chain (30;65) so as
to slacken or tension the chain (30;65); movement in
a direction so as to slacken the chain (30;65) being
such as to enable the replaceable sprocket (23) to
be replaced without having to break the chain
(30;65), and movement in the direction to re-tension
the chain (30;65) being effectable irrespective of the
size of the replacement sprocket (23';23").

FIG.2

## FORAGE HARVESTERS

This invention relates to forage harvesters, i.e. machines which chop crop material into relatively small pieces for fodder.

It is necessary to be able to vary the length of the chopped crop material to suit the type of crop and/or meet general requirements. To this end, it is conventional to vary the rotational speed of the feed rolls which are employed to feed the crop material to the cutterhead, the greater the speed, the greater the length of cut. In one known forage harvester, the speed variation of the feed rolls is effected by a gearbox in the drive line to the feed rolls but this is a relatively expensive expedient. In another known forage harvester, the feed roll drive is of the sprocket-and-chain type and the speed variation of the feed rolls is effected by changing one of the sprockets for one of a different size according to the desired speed increase or decrease. With this arrangement, the procedure required to change the replaceable sprocket is cumbersome and time-consuming. This is because it is necessary first to release one of the sprockets which drives one of the feed rolls via a universal joint and move it in a direction to slacken the chain, then break the chain at the connecting link, and then release the sprocket to be changed and replace it by the new sprocket. This may involve separate sprockets or a cluster of sprockets, in the latter case, the changeover from one to another being effected by releasing the cluster, sliding it to bring the required sprocket into line with the others in the drive line, and re-tightening the cluster. The drive chain is then re-joined, and the released sprocket moved in the opposite direction to re-tension the chain to the required value. The releasable sprocket is used generally for chain tensioning purposes, a facility afforded by the use of at least one universal joint to drive one of the feed rolls, the use of a universal joint being necessary in order to allow for flotation of the feed roll to accommodate varying thicknesses of layers of crop material which have to be handled.

The downtime of the machine necessary to accomplish the required variation in length of cut is unacceptable and the object of the present invention is to provide a simpler and more efficient way of effecting variation in the rotational speed of the feed rolls.

According to the present invention there is provided a forage harvester comprising cutter means operable to chop crop material substantially into pieces of a preselected length, feeder means operable to feed crop material to the cutter means, and chain and sprocket drive means including a drive chain for driving the feeder means and of which one sprocket is replaceable by a differently sized sprocket so as to vary the speed of the drive means and hence the speed of the feeder means which in turn varies the length of cut of the crop material, characterised in that the chain-and-sprocket drive means comprises at least one idler sprocket which is movable away from and towards the chain so as to slacken or tension the chain, movement in the direction so as to slacken the chain being such as to enable the replaceable sprocket to be replaced without having to break the chain, and movement in the direction to re-tension the chain being effectable irrespective of the size of the re-placement sprocket.

The movable idler sprocket may be mounted on an arm which is coupled to control means, the arrangement being such that on operation of the control means, a portion of the arm which is attached to the control means is moved along one path, and a portion of the arm carrying the idler sprocket is moved along a different path. These two paths of movement may be substantially parallel or may be angularly inclined with respect to each other.

The control means may be in the form of a lead screw which may be mounted with its longitudinal axis generally parallel to the span of the chain on which the movable idler sprocket operates, the direction of movement of the idler sprocket preferably being generally at right angles to that span of chain.

A forage harvester embodying the present invention will now be described by way of example, with reference to the accompanying drawings, in which:-

Figure 1 is a side view of the forage harvester, partly in diagrammatic section,

Figure 2 is an enlarged view of part of Figure 1,

Figure 3 is a section on the line III-III of Figure 2, and

Figure 4 is a view similar to that of Figure 2 but showing an alternative embodiment.

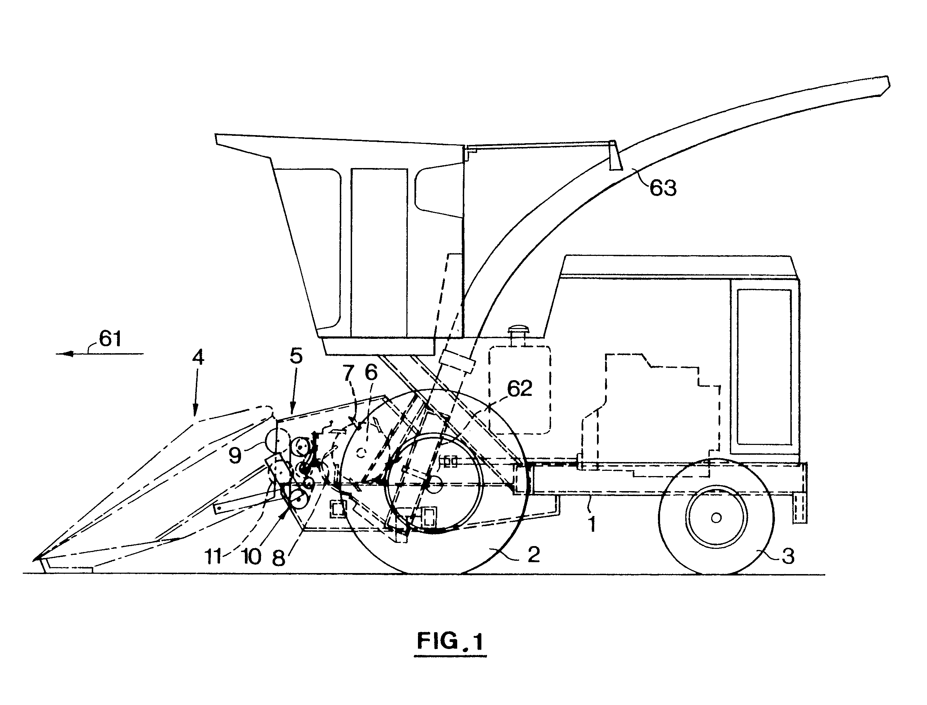

Referring first to Figure 1, the forage harvester comprises a main frame 1 fitted with front and rear ground-engaging wheels 2 and 3, a header 4, front and rear feed rolls indicated generally at 5 and a cutterhead 6 fitted with a plurality of knives 7 which cooperate with a shear bar 8 to chop crop material fed thereto. The components so far described are those of a conventional machine. The header 4 is shown (in phantom) as a corn header but this may be replaced by a conventional crop pick-up device or a conventional cutterbar depending on the crop being harvested.

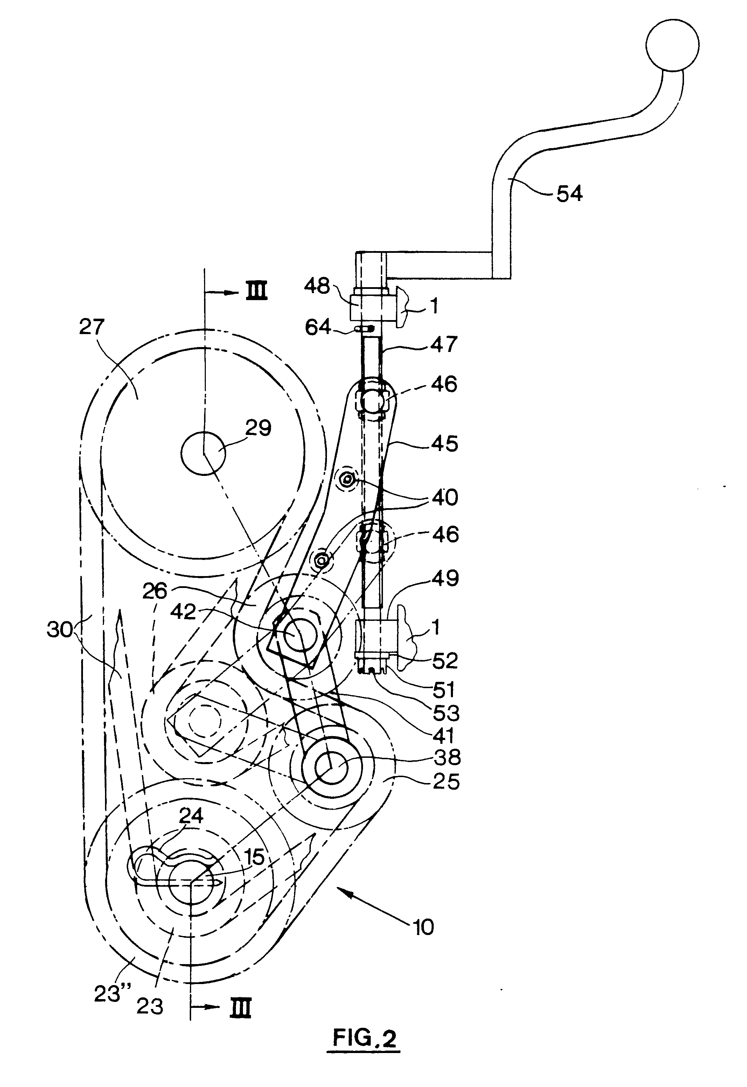

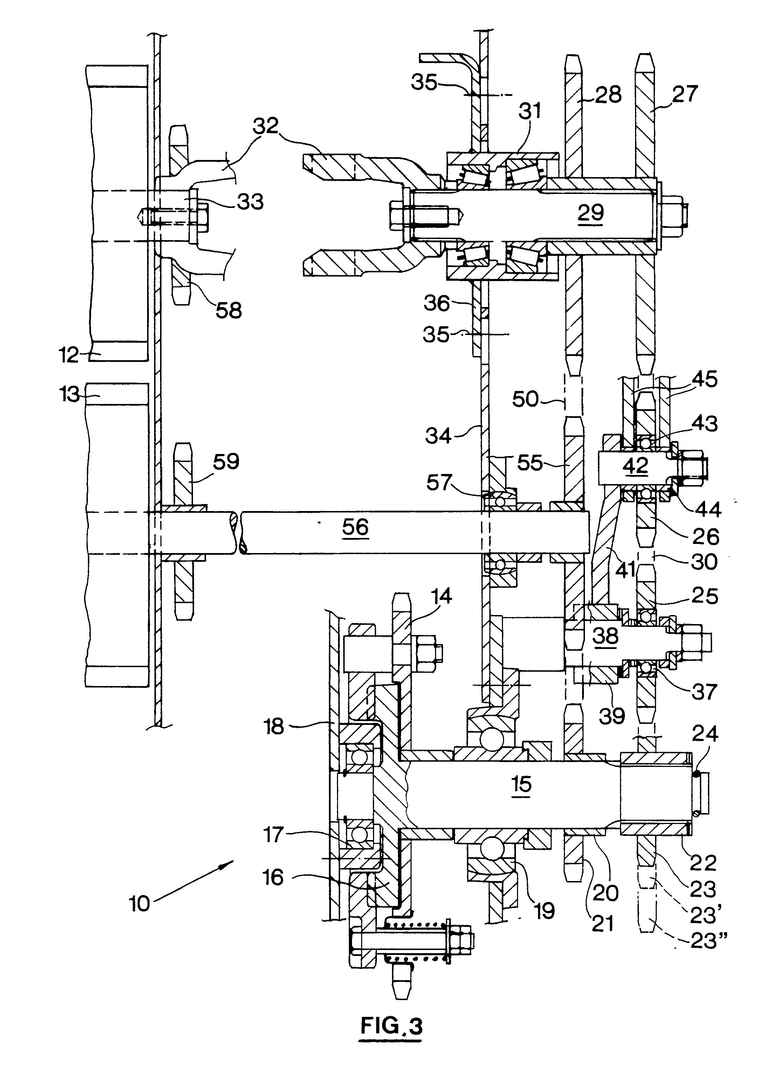

Turning now to Figures 2 and 3, the feed rolls 5 comprise upper and lower front feed rolls 9 and 11, and rear upper and lower feed rolls 12 and 13. The rear feed rolls 12 and 13 are driven and in turn drive the front feed rolls 9 and 11. It is the drive to the rear feed rolls which can be varied in order to change the drive speed of all the feed rolls and hence the length of cut of the crop material. The feed roll drive is of the chain-and-sprocket type (indicated generally at 10) and receives input power from the main drive of the forage harvester via a main sprocket 14 which in fact is driven (by a chain not shown) from a reversible gearbox (also not shown) which can effect a reversal of the feed roll drive to expel any wad of material which might plug, or has plugged, the machine and/or to expel any foreign object detected by a metal detector if fitted.

The sprocket 14 drives a shaft 15 via a jaw clutch 16, the shaft being supported in a bearing 17 mounted on a frame member 18 and a bearing 19 mounted on the frame member 34. Inset from the end of the shaft 15 there is mounted an idler sprocket 21 which rotates freely on the shaft via a bush 20. On the outer end of the shaft 15 there is mounted, by a splined connection, a collar 22 which carries a drive sprocket 23. This is the sprocket which can be changed so as to vary the drive to the feed rolls 5, two alternative and larger sprockets being shown in phantom at 23' and 23". The sprocket 23 is retained on the shaft 15 by a hairpin clip 24 which engages an annular recess in the shaft 15. A chain 30 connects the drive sprocket 23 with a fixed idler sprocket 25, a movable idler sprocket 26, and a fixed sprocket 27 which is one of a double sprocket 27,28 splined on a stub shaft 29 supported in a double roller bearing 31 and connected via two universal joints 32 to a shaft 33 of the upper rear feed roll 12. The double roller bearing 31 is adjustably mounted on a plate 34 of the frame 1 of the machine so that the double sprocket 27,28 can be adjusted. This adjustment is effected by loosening bolts 35 attaching flange 36 to the plate 34 of the main frame 1, the bearing and bolts being movable in respective slots in the plate 34.

The fixed idler sprocket 25 is mounted via a bearing 37 on a stub shaft 38 which is mounted on the plate 34 of the main frame 1 of the machine. The stub shaft 38 pivotally carries a collar 39 from which extends a cranked arm 41, the other end of which in turn carries a further stub shaft 42 which itself freely rotatably carries the movable idler sprocket 26 via a bearing 43. The stub shaft 42 also carries a collar 44 from which extend a pair of cranked arms 45 which are interconnected at two points 40 intermediate their ends by bolts and spacers. The other ends of the arms 45 are attached to opposite sides of a threaded collar 46 (Figure 2) which receives a lead screw 47 and which serves as control means for the arms 45 and hence idler sprocket 26. The lead screw 47 is mounted for rotation at respective ends in bushes 48 and 49 which are attached to the main frame 1, the lower end of the lead screw being retained in position by a nut 51 acting against a thrust washer 52 and held in position by a split pin 53. The upper end of the lead screw 47 is fitted with a cranked handle 54.

The sprocket 28 of the double sprocket 27,28 drives via a chain 50 a sprocket 55 fixed to a shaft 56 of the lower, rear feed roll 13 which is supported in a bearing 57 in the plate 34 of the main frame 1. The rear feed rolls 12 and 13 are driven in opposite directions, as is conventional, and in turn drive the front feed rolls from sprockets 58 and 59 mounted on the respective shafts 33 and 56. Thus in this embodiment there are two parallel, interconnected chain drives forming the drive means for the feed rolls 5.

In use of the machine, it is driven in the direction of the arrow 61 of Figure 1 and the crop material is fed to the feed rolls 5 by the header 4, the feed rolls serving to feed the crop to the cutterhead 6 via an inlet opening to the lower edge of which the shear bar 8 is attached. The crop material is chopped into pieces the average length of which is determined by the rotational speed of the feed rolls 5 and typically is selected from the range of 3/16, 1/4 and 5/16 of an inch (5.0, 6.4 and 8.0 mm). The chopped material is fed to a blower 62 (Figure 1) which discharges it through an adjustable spout 63 to a wagon which is normally towed behind or alongside the machine.

The rotational speed is varied by selecting an appropriate size for the sprocket 23 which can be changed as follows, a larger sprocket increasing the length of cut and a smaller sprocket decreasing the length of cut. The handle 54 is rotated one a retaining hairpin clip 64 has been removed, which pin cooperates with adjacent shieldings (not shown) to prevent inadvertent rotation of the lead screw. This pin 64 is required because normal operation of the machine will vibrate the lead screw 47 and there is a distinct possibility of rotation thereby occurring and hence of the drive chain 30 becoming slack. With the lead screw 47 freed for rotation, the handle 54 is actuated and the lead screw thus rotated, the lead screw in fact staying stationary with the threaded collar 46 moving up or down the lead screw according to the direction of rotation of the handle. In order to change a sprock-et 23, the collar 46 needs to be raised with respect to the lead screw 47. As the collar 46 moves upwardly along the lead screw 47, it takes with it the arms 45 which in turn rotate the arm 41 in a clockwise direction and hence move also the idler sprocket 26 in an arc in the same direction. Thus, the idler sprocket 26 moves away from the drive chain 30 and takes up a position in which the chain no longer engages the sprocket 23, whereby the latter can be removed and replaced by a different sprocket without any difficulty, i.e. without having to break the chain. Removal of the sprocket 23 is preceded by removal of the hairpin clip 24 which retains that sprocket on the drive shaft 15.

It will be appreciated that removal of a sprocket 23, once the hairpin clip 24 has been removed, is a very simple matter as is the subsequent substitution of a sprocket of a smaller or larger size, depending on which is required. The new sprocket 23 is simply slipped on to the end of the drive shaft 15 using the splines, the hairpin clip 24 replaced and then the chain 30 re-tensioned. This re-tensioning is effected simply by rotating the handle 54 in the opposite direction so as to lower the collar 46 on the lead screw 47, thereby lowering the arms 45 and hence rotating the arm 41 in an anticlockwise direction so as to take the idler sprocket 26 in the same direction and hence re-tension the chain 30. The arc of movement over which the idler sprocket 26 can travel is such that it will be able to tension the chain 30 irrespective of the size of sprocket 23 which is chosen at a particular time. The tension in the chain 30 is set by the operator merely by sensing the torque on the handle 54 and there is no special means for setting the chain tension.

Thus, to change a sprocket 23, and hence vary the length of cut effected by the forage harvester on crop material, is a very simple and quick exercise. This is in contrast to the previous arrangement in which the stub shaft 29 and single sprocket thereon had to be loosened and lowered so as to slacken the chain to a certain extent to enable it to be broken at the connecting link so as to free the sprocket 21, which in that case was a drive sprocket and not an idler sprocket, replace that sprocket by the one of the required size, reconnect the chain and then readjust the position of the stub shaft 29 to adjust the chain tension. All of that was a relatively cumbersome, time-consuming exercise which could take upwards of 20 minutes to effect. In contrast, the present invention is extremely quick and one can change a sprocket in approximately 2 minutes. This is a significant saving, especially in Europe, because the length of cut may need to be changed several times a day, especially if a machine is being operated by a contractor who is serving several farmers, each farmer and/or crop requiring a different length of cut. In the USA, changes are far less frequent but nevertheless, the extreme ease of change is welcome in all circumstances.

It will be noted that the lead screw 47 extends generally parallel to the run of the chain 30 which would span the sprockets 27 and 25 if it were not acted upon by the sprocket 26 to deflect it for tensioning purposes, this orientation being referred to as the span of the drive chain on which the movable idler sprocket 26 operates. Also, the general direction of movement of the sprocket 26 is substantially at right angles to the same span of the chain 30. Thus the mechanism which permits the simple and quick replacement of the sprocket 23 is extremely compact. It will be appreciated that this compactness is obtained in part by arranging the various components such that, when operated, the portions of the arms 45 which are attached to the collar 46 are moved along one path and the portions of the arm 45 carrying the idler sprocket 26 are moved along a different path. Preferably these paths of movement are at an angle with respect to each other although in an alternative embodiment they may be substantially parallel.

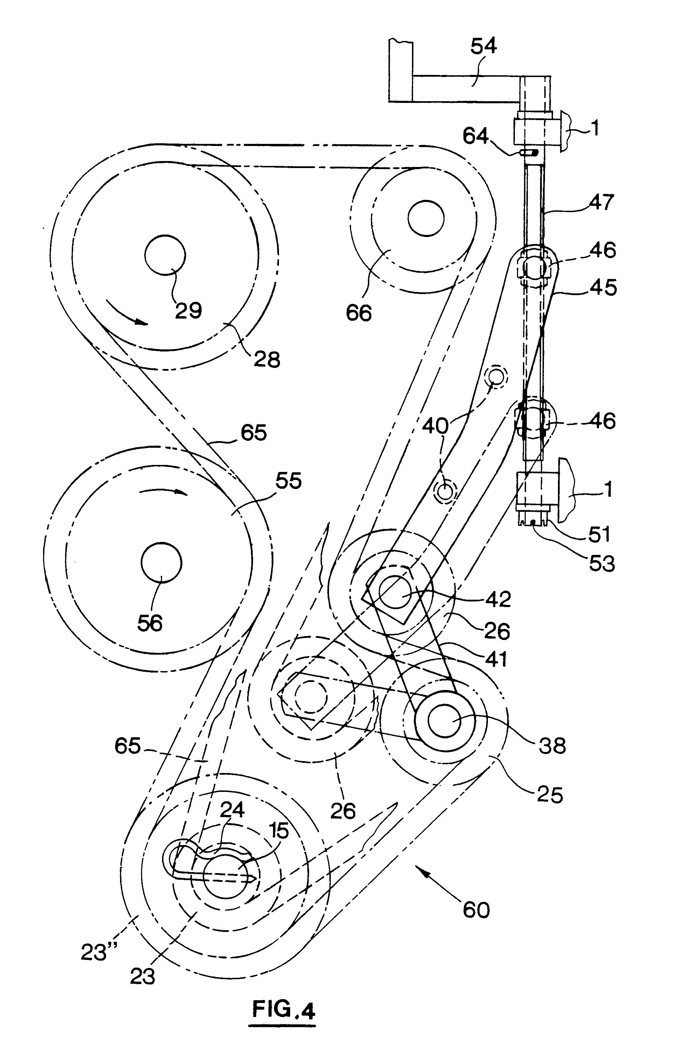

Turning now to Figure 4, this shows an alternative arrangement in which only a single drive chain 65 and associated sprockets is employed to drive the feed rolls 5 from the main drive sprocket 14, this drive being indicated generally at 60. The sprockets 23, 25, 26, 28 and 55 are present as in the first embodiment but an extra idler sprocket 66 is employed in order to throw the chain 65 away from the sprocket 28 to allow the required movement of the movable idler sprocket 26. Furthermore, these sprockets are of course mounted in a common drive plane for engagement by the chain 654. The procedure for replacing the sprocket 23 is precisely the same as that described with respect to the first embodiment.

Whilst the rotation of the lead screw 47 has been described as being effected manually, it could be power driven by some form of motor but the operator still needs to be present to be able to change the sprocket 23, the various sizes of sprockets either being supplied separately or by way of a cluster which is slid along the shaft 15 so as to engage the required sprocket with the chain 30 or 65.

## Claims

1. A forage harvester comprising cutter means (6,7,8) operable to chop crop material substantially into pieces of a preselected length, feeder means (5) operable to feed crop material to the cutter means (6,7,8), and chain-and-sprocket drive means (10;60) including a drive chain (30;65) for driving the feeder means (5) and of which one sprocket (23) is replaceable by a differently sized sprocket (23',23") so as to vary the speed of the drive means (10;60) and hence the speed of the feeder means (5) which in turn varies the length of cut of the crop material, characterised in that the chain-and-sprocket drive means (10;60) comprises at least one idler sprocket (26) which is movable away from and towards the chain (30;65) so as to slacken or tension the chain (30;65); movement in a direction so as to slacken the chain (30;65) being such as to enable the replaceable sprocket (23) to be replaced without having to break the chain (30;65), and movement in the direction to re-tension the chain (30;65) being effectable irrespective of the size of the replacement sprocket (23',23").

2. A forage harvester according to claim 2, characterised in that the movable idler sprocket (26) is mounted on an arm (45) which is coupled to control means (46,47,54); the arrangement being such that on operation of the control means (46,47,54), a portion of the arm (45) which is attached to the control means (46,47,54) is moved along one path, and a portion of the arm (45) carrying the idler sprocket (26) is moved along a different path.

3. A forage harvester according to claim 2, characterised in that the two paths of movement are substantially parallel.

4. A forage harvester according to claim 2, characterised in that the two paths of movement are at an angle with respect to each other.

5. A forage harvester according to claim 4, characterised in that the path of the idler sprocket (26) is arcuate.

6. A forage harvester according to anyone of claims 2 to 5, characterised in that the idler path is generally at right angles to the span of the drive chain (30;65) on which it operates to tension the latter.

7. A forage harvester according to anyone of claims 2 to 6, characterised in that the path of movement of the position of the arm (45) which is attached to the control means (46,47,54) is generally parallel to the span of the chain (30;65) on which the idler sprocket (26) is operative.

8. A forage harvester according to any one of the claims 2 to 7, characterised in that the idler sprocket (26) is supported between the arm (45) and a link (41) which is pivotally attached to the arm (45) and also pivotally attached to a supporting structure (38).

9. A forage harvester according to claim 8, characterised in that the supporting structure (38) is a shaft carrying a second idler sprocket (25) of the chain-and-sprocket drive means (10;60).

10. A forage harvester according to claim 2 and any one of claims 3 to 9 appended thereto, characterised in that the control means (46,47,54) comprises a lead screw (47) to which the arm (45) is coupled such that on rotation of the screw (47), the related arm portion moves rectilinearly.

11. A forage harvester according to claim 10, characterised in that the arm (45) is pivotally attached to a threaded collar (46) which moves rectilinearly relative to the lead screw (47) when the latter is rotated.

12. A forage harvester according to claim 10 or 11, characterised in that the lead screw (47) is rotatable manually by a handle (54) attachable to one end thereof.

13. A forage harvester according to any one of the claims 10 to 12, characterised in that the longitudinal axis of the lead screw (47) is generally parallel to the span of the chain (30;65) on which the movable idler sprocket (26) operates.

14. A forage harvester according to claim 1, characterised in that the drive means (10) is a double chain-and-sprocket drive arrangement comprising a driven shaft (15) on which is mounted for rotation therewith a first fixed sprocket forming the replaceable sprocket (23, 23', 23"), a first fixed idler sprocket (25) freely rotatably mounted on a first stub shaft (38), the movable idler sprocket (26) which is freely rotatably mounted on a second stub shaft (42), a second fixed sprocket (27) mounted for rotation with a first driven shaft (29), and a chain (30) interconnecting these sprockets (23,25,26,27) to form a first drive train, and a second drive train comprising a third fixed sprocket (28) mounted for rotation with the first driven shaft (29), a fourth fixed sprocket (55) mounted for rotation with a second driven shaft (56), a second fixed idler sprocket (21) freely rotatably mounted on the drive shaft (15) and a chain (50) interconnecting the sprockets (28,55,21) of the second drive train, the arrangement being such that the first driven shaft (29) and the second driven shaft (56) are rotated in opposite directions, and further characterised in that the first and second driven shafts (29,56) are connected to upper and lower feed rolls (12,13), respectively, whereby these feed rolls (12,13) are also driven in opposite directions.

15. A forage harvester according to claim 14, characterised in that the movable idler sprocket (26) is rotatably mounted on one end of an arm (45) the other end of which is coupled to control means (46,47,54), the idler sprocket (26) also being supported by a link (41) to which the arm (45) is pivotally attached at one end, the other end of the link (41) being pivotally mounted on the first stub shaft (38).

16. A forage harvester according to claim 14 or 15, characterised in that the movable idler sprocket (26) is movable generally at right angles to the span of the drive chain (30) of the first drive train which would otherwise extend between the first fixed idler sprocket (25) and the second fixed sprocket (27).

17. A forage harvester according to claim 1, characterised in that the drive means (60) is in the form of a single drive train comprising a drive shaft (15), the replaceable sprocket (23,23',23") mounted for rotation with the drive shaft (15), a third fixed idler sprocket (25) freely rotatably mounted on a third stub shaft (38), the movable idler sprocket (26) which is freely rotatably mounted on a fourth stub shaft (42), a fourth fixed idler sprocket (66) which is freely rotatably mounted on a fifth stub shaft, a fifth fixed sprocket (28) mounted for rotation with a third drive shaft (29), and a sixth fixed sprocket (55) mounted for rotation with a fourth driven shaft (56), and a chain (65) interconnecting these sprockets (23,25,26,28,55) such that the third and fourth driven shafts are driven in opposite directions.

18. A forage harvester according to claim 17, characterised in that movable idler sprocket (26) is movable generally at right angles to the span of the drive chain (65) which would otherwise extend between the third fixed idler sprocket (25) and the fourth fixed idler sprocket (66).

FIG.1

0 242 463

0 242 463

FIG. 2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 739 559 (LONG et al.)<br>* Figures 1-3; column 6, line 24 - column 7, line 2 * | 1 | A 01 D 69/00<br>A 01 F 29/14 |
| A | | 6,14, 16,18 | |
| | --- | | |
| X | FR-A-2 340 681 (INTERNATIONAL HARVESTER)<br>* Figures 2-6; page 7, line 24 - page 8, line 14 * | 1 | |
| A | | 17 | |
| | --- | | |
| A | FR-A-2 287 164 (CLAAS MASCHINENFABRIK)<br>* Figure 1; page 2, line 31 - page 3, line 27 * | 1,2,4-6 | **TECHNICAL FIELDS SEARCHED (Int. Cl.4)**<br><br>A 01 D<br>F 16 H<br>A 01 F |
| | --- | | |
| A | US-A-1 744 746 (BROWN)<br><br>* Figures 1,2; page 1, line 71 - page 2, line 5 * | 2,4-7, 13,15, 16,18 | |
| | --- | | |
| A | CH-A- 405 854 (MASCHINENFABRIK FAHR)<br><br>* Figure 1; page 1, lines 46-71 * | 2,3,5-8,10, 18 | |
| | ---     -/- | | |

The present search report has been drawn up for all claims

| Place of search | Date of completion of the search | Examiner |
|---|---|---|
| THE HAGUE | 16-12-1986 | DISSEN H.D. |

| **DOCUMENTS CONSIDERED TO BE RELEVANT** | | | Page 2 |
|---|---|---|---|
| Category | Citation of document with indication, where appropriate, of relevant passages | Relevant to claim | CLASSIFICATION OF THE APPLICATION (Int. Cl.4) |
| A | DE-A-2 707 247 (KLÖCKNER-HUMBOLDT-DEUTZ) <br><br> * Figures 1,2; page 6, line 14 - page 7, line 16; page 8, lines 10-17 * <br><br> ----- | 2,4,5, 7,10, 11,13 | |
| | | | **TECHNICAL FIELDS SEARCHED (Int. Cl.4)** |
| The present search report has been drawn up for all claims | | | |

| Place of search | Date of completion of the search | Examiner |
|---|---|---|
| THE HAGUE | 16-12-1986 | DISSEN H.D. |